# EUROPEAN PATENT SPECIFICATION

(11) **EP 4 107 023 B1**
(45) Date of publication and mention of the grant of the patent: **29.05.2024**
(21) Application number: 21713739.7
(22) Date of filing: 19.02.2021
(51) Int. Cl.: B60K 17/04, F16H 3/50

(54) **VEHICLE AXLE COMPRISING AN IMPROVED INTEGRATED REDUCING GEAR SYSTEM**
FAHRZEUGACHSE MIT VERBESSERTEM INTEGRIERTEM UNTERSETZUNGSGETRIEBESYSTEM
ESSIEU DE VÉHICULE COMPRENANT UN SYSTÈME D'ENGRENAGE RÉDUCTEUR INTÉGRÉ AMÉLIORÉ

(30) Priority: 20.02.2020 IT 202000003485
(43) Date of publication of application: 28.12.2022
(73) Proprietor: IVECO S.P.A., 10156 Torino (IT)
(72) Inventor: PEREIRA DE LEMOS, José Francivaldo, Bairro Sao Geraldo Sete Lagoas MG (BR)
(74) Representative: Studio Torta S.p.A.
(86) International application number: PCT/IB2021/051437
(87) International publication number: WO 2021/165913

(56) References cited:
- WO-A1-01/79726
- WO-A1-2018/107258
- US-B2- 6 652 405

## Description

### TECHNICAL FIELD

The invention relates to an axle for a vehicle, in particular an axle of a heavy vehicle comprising a reducing gear system integrated in the axle.

### KNOWN STATE OF THE ART

As it is known, in a wheel vehicle provided with at least one internal combustion engine, reducing the torque coming from the driveshaft relative to the axles of the vehicle is essential.

As it is further known, vehicles are normally provided with a differential gear assembly, which is configured to differentiate the torque coming from the driveshaft between a pair of axle shafts of the axle, due to known reasons of dynamics while driving the vehicle.

The aforementioned torque reduction is normally carried out by means of known gearbox devices arranged between the driveshaft and the aforesaid differential gear assembly.

However, in case of heavy vehicles, these reduction ratios are insufficient, in terms of number, to be able to provide a suitable reduction ratio between the torque of the driveshaft and the torque delivered to the wheels of the axle in the different load conditions.

Indeed, it is clear that a heavy vehicle, such as a truck, has to bear a significant weight difference between the unloaded condition and the maximum load condition and, hence, the highest gears are not necessarily the most suited ones for the unloaded condition of the vehicle.

A known solution to this problem is described in document IT1427916, which discloses a torque reducing system integrated in a wheel hub of a heavy vehicle. Thanks to this reducing system, a further torque reduction can be provided downstream of the differential gear of the vehicle, thus doubling the number of reduction ratios available compared to normal.

However, the system described in the aforementioned document has particularly large dimensions and cannot be used for different types of brakes or platforms that can be applied to the wheel of the vehicle.

Furthermore, it is particularly hard to be mounted as well as complicated to be subjected to maintenance.

Example of known arrangements are disclosed in publications WO2018107258 A1, WO2001079726 A1 or US6652405 A.

Therefore, there is a strong need for a reducing gear system for an axle of a vehicle, which can solve the problems discussed above.

The object of the invention is to fulfil the aforementioned needs in an optimized and economic fashion.

### SUMMARY OF THE INVENTION

The aforesaid object is reached by an axle provided with a reducing gear system and by a vehicle according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a schematic, longitudinal section view of an axle comprising a reducing gear system according to the invention in a first operative condition;
- figure 2 is a schematic, longitudinal section view of the axle of figure 1 in a first operative condition; and
- figures 3 and 4 are enlarged views of portions of figures 1 and 2, respectively.

### DETAILED DESCRIPTION OF THE INVENTION

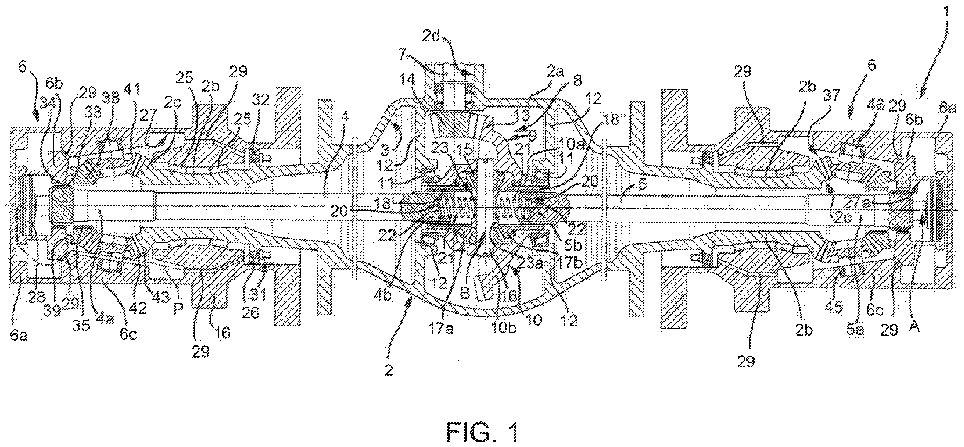

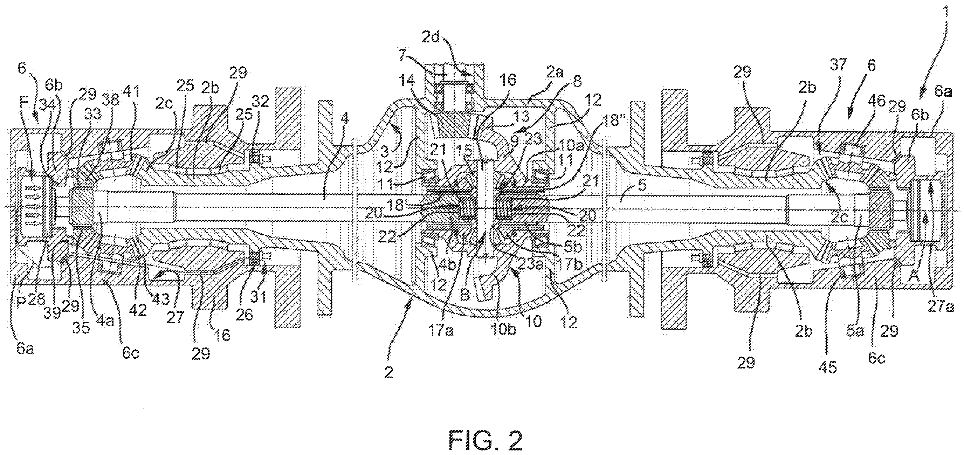

In figures 1 and 2, number 1 indicates, as a whole, an axle of a vehicle, preferably a heavy vehicle, such as truck, basically comprising a casing 2 defining a space 3 and a pair of axle shafts 4, 5 at least partially housed in the space 3.

The casing 2 defines a shape extending along a longitudinal axis A and basically comprises a central portion 2a and a pair of side portions 2b extending in a continuous manner from the central portion 2a along the axis A. Advantageously, the central portion 2a has an extension in a transverse direction relative to the axis A which is greater than the extension of the side portions 2b in the same direction.

According to the embodiment described herein, the side portions 2b are open at the ends thanks to respective openings 2c obtained at the respective ends of the side portions 2b so as to allow the space 3 to communicate with the outside ad so as to allow respective outer end portions 4a, 4b of the axle shafts 4, 5 to project out of the casing 2.

Furthermore, the axle 1 comprises a pair of wheel hubs 6, which are advantageously carried by the casing 2 so as to be free to rotate and are each configured to cooperate with a respective end portion of the axle shafts 4, 5, as described more in detail below.

The central portion 2a of the casing 2 also defines a further opening 2d, which is configured to allow for the passage of a driveshaft 7, which is operatively connected to a torque source, such as an internal combustion engine (not shown).

The driveshaft 7 is operatively connected to the axle shafts 4, 5 by means of a torque splitting assembly 8, which is configured to divide the torque coming from the driveshaft 7 between the axle shafts 4, 5. In the example described herein, the driveshaft 7 is perpendicular to the longitudinal axis and the torque splitting assembly 8 comprises a known differential gear 9, which is operatively interposed between the driveshaft 7 and the axle shafts 4, 5.

The differential gear 9 basically comprises a gear train carrier 10, which is carried, so that it can freely rotate, between the casing 2 and each one of the axle shafts 4, 5 by means of rolling members 11, for example ball bearings. Therefore, according to the embodiment described herein, the gear train carrier 10 comprises a cylindrical portion 10a, which is interposed, in a coaxial manner relative to the axis A, between respective inner end portions 4b, 5b of the axle shafts 4, 5 and supporting flanges 12 extending into the space 3 from the central portion 2a of the casing 2 perpendicularly to the longitudinal axis A and advantageously manufactured as one single piece together with the casing itself.

The gear train carrier 10 further comprises a flanged portion 10b perpendicularly extending from the cylindrical portion 10a into the space 3 towards the casing 2 and defining, at the end, a toothing 13, which is configured to mesh with a toothing 14 carried by the driveshaft 7.

The gear train carrier 10 also carries a plurality of planet gears 15, for example four planet gears, which are angularly equally spaced apart from one another by 90° and are supported by a cross-shaped support 16, which is rigidly carried by the central portion 10a of the gear train carrier 10 and around whose arms the planet gears 15 can rotate. In particular, the planet gears rotate on the support 16 around axes contained in a plane B, which is perpendicular to the axis A.

The planet gears 14 cooperate with a respective driven gear respectively comprising a left bevel gear 17a and a right bevel gear 17b, each respectively carried by one of the axle shafts 4, 5.

According to the invention, the left and right bevel gears 17a, 17b are carried by the respective axle shaft 4, 5 in a movable manner along the longitudinal axis A, however always operatively connected to the respective axle shaft.

In particular, the connection between the left and right bevel gears 17a, 17b and the respective axle shaft 4, 5 is obtained by means of respective grooved couplings 18', 18'' obtained between the inner end portions 4b, 4b of the axle shafts 4, 5 and an inner spline surface of the left and right bevel gears 17a, 17b. Said grooved couplings 18', 18'' allow the axles shafts 4, 5 to slide along the longitudinal axis A relative to the left and right bevel gears 17a, 17b, though allowing them to be continuously coupled to one another in a rotary manner.

Advantageously, the axle 1 comprises elastic means 20, which are operatively interposed between each inner end portion 4a, 5b of the axle shafts 4, 5 and the gear train carrier 10 and are configured to impart a force along the longitudinal axis A to the axle shafts 4, 5 so as to keep them in an operative position in which the left and right bevel gears 17a, 17b mesh with the inner end portions 4b, 5b.

In particular, in the embodiment described herein, the elastic means 20 comprise a coil spring 21, which is axially interposed, along the axis A, between each inner end portion 4a, 5b of the axle shafts 4, 5 and the cross-shaped support 16.

More in detail, a first end of each coil spring 21 cooperates in contact with a striker surface obtained in a seat 22 of the respective inner end portion 4a, 5b of the axle shafts 4, 5 and a second end of each coil spring 21 cooperates in contact with a striker surface obtained on a supporting element 23 carried by the cross-shaped support 16 in an integral manner.

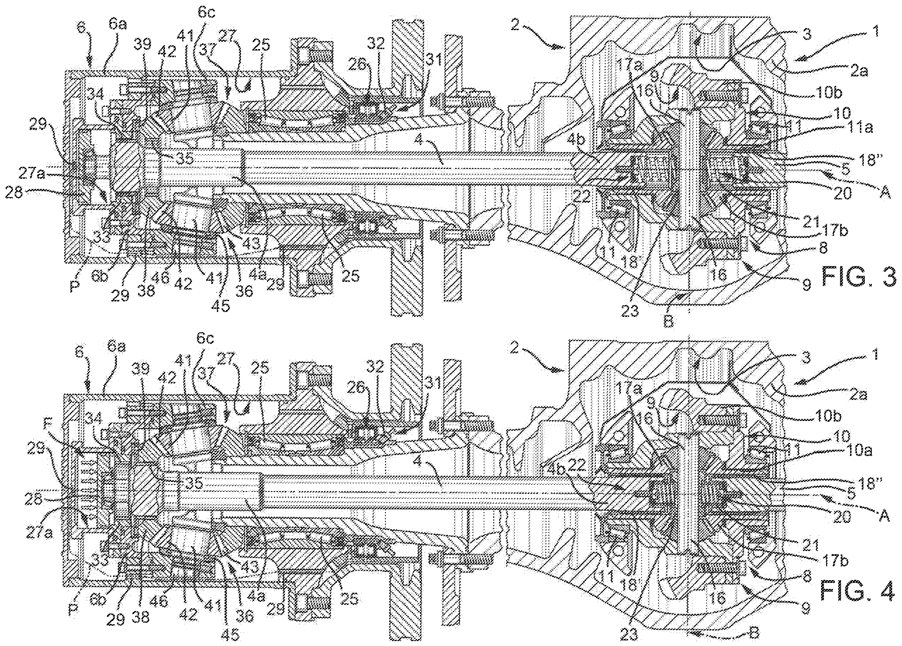

Furthermore, both seats 22 are coaxial to the longitudinal axis A and each seat 22 partially surrounds a plurality of coils of the coil spring 21 even in the greatest extension condition (Figures 1, 3).

Moreover, the support 23 defines, on both sides of the cross-shaped support 16, respective lowered central portions 23a, which are coaxial to one another and, furthermore, are coaxial to the longitudinal axis A and, hence, to each seat 22. In this way, the central portion 23 of the support 23 defines a housing seat for the portion of the end of the respective coil spring 21.

Back to the wheel hubs 6, for the sake of simplicity reference will be made to only one of them, for example the left wheel hub, which is enlarged in figures 2 and 3. Obviously, the information given below also applies, in the same way, to the right wheel hub, as the structure described below is mirror-like relative to the plane B f the planet gears 15.

The wheel hub 6, as mentioned above, is supported in such a way that it can freely rotate relative to the casing 2, in particular it is hollow and is supported on the outside of the side portion 2b of the casing 2, coaxially to the longitudinal axis A. In the example described herein, the wheel hub 6 is supported by means of supporting means 25, such as a pair of conical bearings, and by means of sealing means 26, such as an O-ring.

In particular, the hub 6 comprises a main portion 6a with a substantially cylindrical shape defining, around the side portion 2b of the casing 2, a chamber 27, which is radially delimited between the outer surface of the side portion 2b and the inner surface of the main portion 6a of the wheel hub 6. Longitudinally, namely along the axis A, the chamber 27 is delimited by the sealing means 26, in a position close to the central portion 2a of the casing 2, and by a slidable element 28, which is arranged on the opposite side relative to the sealing means 26 with respect to the central portion 2a of the casing 2 and is described more in detail below. In particular, the chamber 27 is divided into several portions, which are not numbered for greater clarity but can clearly be identified in the accompanying figures, fluidcally connected to one another by means of a plurality of ducts 29 so that there is a fluid-leading continuity between the sealing means 26 and the slidable element 28, namely among all portions of the chambers 27.

The axle 1 further comprises valve means 31, which are configured to be fluidically connected to a pressurised air circuit (no shown) of the vehicle in order to allow compressed air to be injected into the chamber 27 so as to pressurise it or in order to allow air to be released from the chamber into a circuit of the vehicle or into the atmosphere. Advantageously, said valve means 31 comprise an injector 32, which is configured to allow for the aforementioned flows between the chamber 27 and the compressed air circuit and/or the atmosphere.

The compressed air injected by the injector 32 into the chamber 27 is configured to exert a pressure F upon the slidable element so as to cause it to move between a first operative condition (figures 2, 4), in which the volume of the chamber 27 reaches a greater and maximum value compared to a second operative condition (figures 1, 3), with a low or absent pressure in the chamber 27, for example released by means of the injection means 31, in which the volume of the chamber 27 is smaller, minimum.

According to the embodiment described herein, the slidable element 28 is housed, in a sliding and fluid-tight manner, in a portion 27a of the chamber 27, which is radially delimited by an inner portion 6b of the wheel hub 26 and is longitudinally delimited, along the axis A, on one side, by the inner portion 6b itself fluidically connected to the rest of the chamber 27 by a channel 29 and, on the other side, is open towards the opening 2c of the casing 2 so as to allow the outer end portion 4a of the axle shaft 4 to be housed.

In particular, the inner portion 6b of the wheel hub 6 extends inside the chamber 27 so as to surround the axle 4 and is substantially arranged at the opposite end relative to the sealing means 26 of the wheel hub 6. The inner portion 6b is connected to the cylindrical portion 6a by means of an intermediate portion 6c.

Hence, based on the configuration described above by way of example, the slidable element 28 is configured to move along the longitudinal axis A in order to define the aforesaid first and second operative conditions, wherein, in the first condition, it is substantially in contact with the inner portion 6a of the wheel hub 6 and, in the second condition, it is spaced apart from the latter.

Advantageously, the slidable element 28 is carried by the outer end portion 4a of the axle shaft 4 and, preferably, it is manufactured as one single piece together with the latter. Consequently, the axle shaft 4 is caused to move along the axis A thanks to the force exerted by the pressure F upon the slidable element 28.

According to the invention, the axle shaft 4 comprises at least one toothing 33, in the case described herein one single toothing, which extends from the outer surface of the axle shaft 4 perpendicularly to the longitudinal axis A and is configured to selectively engage toothings 34, 35 carried by the wheel hub 6, respectively, so as to define different transmission ratios.

Advantageously, the toothing 33 is configured to mesh with one of the toothings 34, 35 in order to define a transmission ratio equal to 1, whereas the same toothing 33 is configured to mesh with the other one of the toothings 34, 35 in order to define a transmission ratio other than one and preferably ranging from 1.5 to 2.5.

Advantageously, said toothing 33 can slide relative to the toothings 34, 35 and the axle 1 comprises a transmission 36, which is interposed between the toothing 35 defining a transmission ratio other than 1 and the wheel hub 6. According to the embodiment described herein, the first toothing 34 is integral to the wheel hub 6, in particular along the an inner surface of the inner portion 6b and, therefore, the torque of the axle 4 is directly transmitted to the wheel hub 6 according to the transmission ratio between the toothings 33 and 34.

On the other hand, advantageously, the transmission 36 comprises an epicyclic gear 37, which is advantageously interposed, inside the chamber 27 and along the axis A, between the inner portion 6b of the wheel hub 6 and the supporting elements 25. According to the embodiment described herein, the epicyclic gear comprises a sun gear 38 defining the second gearing 35; advantageously, the sun gear 38 is coaxial to the longitudinal axis A and is supported, in a rotary and sliding manner, by the inner portion 6a, for example by means of friction rings 39 or bearings axially interposed, along the longitudinal axis A, between the sun gear 38 and the inner portion 6a.

The epicyclic gear 37 further comprises a plurality of planet gears 41, which are carried by the wheel hub 6, hence serving as gear train carrier, and are configured to mesh with a toothing 42 obtained on a portion of the sun gear 38 and with a second toothing 43 obtained on the side portion 2b of the casing 2, advantageously close to the relative opening 2c Consequently, since the planet gears 41 are rigidly carried by the wheel hub 6 and since the sun gear 38 cooperating with the planet gears 41 is caused to rotate by the axle shaft 4, they cause the wheel hub 6 to rotate around the axis A with a transmission ratio with a predetermined value, for example within the aforementioned range.

In particular, the planet gears 41 are bevel gears and, hence, the toothings 42, 43 are configured to cooperate in order to form a bevel gearing with the planet gears 41. Furthermore, the planet gear 41 are preferably supported by the wheel hub 6 in such a way that they can freely rotate relative to the respective rotation axis, for example by means of respective supporting elements 45, such as bushings, interposed between a hub 41a of the planet gears 41 and respective seats 46 obtained in the intermediate portion 6c.

Advantageously, the axis of the planet gears 41 is inclined both relative to the plane B of the planet gears 15 of the differential gear 8 and relative to the longitudinal axis A of the axle 1.

According to the enlarged views of figures 3, 4, which contain more constructive elements of the axle 1, the wheel hubs 6 and the casing 2 advantageously consist of a plurality of elements connected to one another to define the shapes described above, merely in order to allow the different elements described above to be mounted.

Therefore, since figures 1, 2 and also figures 3 and 4 are substantially schematic views, the axle 1 can clearly comprise further elements, such as threaded elements, lateral and axial containing rings, friction rings, bushings and bearings, which are not shown herein, for they are known elements, and are designed to allow the axle 1 described above to be mounted and to correctly operate.

The different toothings mentioned in the description above advantageously have straight teeth, but they can be of any type.

The axle 1 according to the invention described above works as follows.

In any operating condition, the torque coming from the driveshaft 27 is imparted to the gear train carrier 10 of the differential gear 8 thanks to the meshing between the toothings 13 and 14 and, as it is known, is divided between the axle shafts 4, 5 depending on known dynamic conditions of the vehicle.

Hereinafter, for the sake of brevity and simplicity, reference will be made to the sole left wheel hub 6, since the operation of the right hub is identical.

In a first operating condition, which is shown in figures 1 and 3, the chamber 27 has a low pressure/atmospheric pressure and, hence, the slidable element 28 is consequently placed in contact with the inner portion 6c of the wheel hub. Consequently, the axle shaft 4 is placed in such a way that the toothing 33 meshes with the first toothing 34 thanks to the thrust exerted by the spring 21, which acts so as to impart a force in the direction of the axis A, which is configured to hold the slidable element 28 in contact with the inner portion 6b. In this condition, as described above, the torque coming from the axle shaft 4 is directly transmitted to the wheel hub, without any reduction, since the toothing 34 is integral to the inner portion 6b of the wheel hub 6 and, hence, to the latter.

In a second operating condition, which is shown in figures 2 and 4, the chamber 27 is pressurised thanks to the compressed air injected by the valve means 31. Thanks to the channels 29, the compressed air comes into contact with an outer surface of the slidable element 28, thus exerting a force against it. The force exerted by the air pressure is such as to exceed the force imparted by the spring 21, which tends to become compact due to the thrust of the axle shaft 4, which tends to move until the spring 21 reaches a packed condition and, preferably, the inner end portion 4b of the axle shaft 4 comes into contact with the supporting element 23 housed inside the differential gear 9. In this position, the torque, from the axle shaft 4, is transmitted from the meshing of the toothings 33 and 35 to the sun gear 38 and, from here, to the planet gears 41, which mesh between the sun gear 38 and the casing 2. Since the latter is fixed and the planet gears 41 are supported by the wheel hub 6 with the sole freedom of rotation around their axis, the wheel hub 6 is caused to rotate by the planet gears 41 around the axis A. This transmission, through the elements of the epicyclic gear 37, allows the torque reduction value obtained to be within the range described above.

In order to shift from the second to the first operating conditions, the chamber 27 needs to be released, for example by means of valve means 31, so that the force exerted by the spring 21 pushes again the axle shaft 4 and, hence, the slidable element 28, causing it to strike against the inner portion 6b of the wheel hub 6, thus going back to the configuration described above, which enables the first operating condition of figures 1 and 3.

Owing to the above, the advantages of an axle comprising an integrated reducing gear system according to the invention are evident.

Thanks to this system, a reducing gear system is provided, which is integrated in an axle, is versatile, compact and economic as well as easy to be mounted and subjected to maintenance compared to known systems.

Thanks to the additional reducing gear system and to the reduction range that can be optimized depending on the type and size of the vehicle, fuel consumptions as well as pollutant emissions can be reduced.

Furthermore, compared to the solution described in IT1427916, fewer elements are present, for example the housing of the spring by means of a sleeve is absent in this invention, where the spring is directly housed between the differential gear and the axle shaft.

In this way, besides simplifying assembly and reducing costs, it is easier for the lubricant to flow along the axle shaft, thus improving the lubrication of all components of the gear 37. Indeed, the sleeve of the prior solution acted as lubricant collecting element, thus preventing it from being correctly spread to the adjacent gears.

Furthermore, by eliminating the sleeve of the spring from the wheel hub, a compact wheel hub can be provided, which, hence, can adjust to different types of wheels and brakes. Furthermore, the elimination of the sleeve and the integration of the spring housing between the axle shaft and the differential gear, which are connected to one another by a spline, allows for a more sturdy and safe solution than the previous one.

Finally, the axle comprising an integrated reducing gear system according to the invention can be subjected to changes and variants, which, though, do not go beyond the scope of protection set forth in the appended claims.

Obviously, as mentioned above, the casing 2 and the wheel hub 6 can have different shapes and consist of more and different pieces.

In addition, the gears described above could change and there could be elements that are not described herein, but are known when dealing with the assembly of an axle according to the invention.

Clearly, the description above relates to an air actuation, which is deemed to be the most effective and economic one, however the use of equivalent actuator means should not be excluded, said equivalent actuator means being, for example, electromagnetic, mechanical or fluid actuator means, which are configured to move the slidable element 28 instead of the air pressing force described herein.

## Claims

1. An axle (1) for a vehicle comprising:
- a casing (2) defining a space (3) along a longitudinal axis (A) and comprising a central portion (2a) and a pair of side portions (2b) connected to the central portion along said axis (A);
- a pair of axle shafts (4, 5) partially housed in said space (3) and comprising respective inner ends (4b, 5b) cooperating with a driveshaft (7) configured to provide a drive torque to said axle shafts (4, 5);
- respective wheel hubs (6) carried in a rotationally free manner by said casing (2) on said side portions (2b) and each cooperating with a respective outer end (4a, 5a) of said axle shafts (4, 5),
said axle (1) comprising a torque splitting assembly (8) housed in said space (3) and operatively interposed between said driveshaft (7) and said axle shafts (4, 5) and configured to divide the torque coming from said driveshaft (7) to the latter, **characterized in that** said axle shafts (4, 5) are connected to said torque splitting assembly (8) in a slidable manner with respect to said axis (A),
said axle (1) comprising elastic means (20) housed in said torque splitting assembly (8) and configured to exert a force directed parallel to said axis (A) against said axle shafts (4, 5) for keeping them in a first operative condition, said axle (1) furthermore comprising actuator means interposed between each wheel hub (6) and the respective axle shaft (4, 5) configured to selectively exert a force on the respective axle shaft (4, 5) higher than the force exerted by said elastic means (20) for moving them from said first to a second operative condition, each axle shaft (4, 5) being provided with a first toothing (33) and each wheel hub (6) being provided with a second toothing (34) made integrally with said wheel hub (6) and with a transmission (37) configured to be operatively interposed between said wheel hub (6) and the respective axle shaft (4, 5), said first toothing (33) meshing with said second toothing (34) in said first operative condition and with said transmission (37) in said second operative condition,
wherein the transmission ratio between the respective axle shaft (4, 5) and the wheel hub (6) obtained by means of said first and second toothings (33, 34) being different with respect to the transmission ratio between the respective axle shaft (4, 5) and the wheel hub (6) obtained by means of said second toothing (34) and said transmission (37).

2. The axle according to claim 1, wherein the transmission ratio between the respective axle shaft (4, 5) and the wheel hub (6) obtained by means of said first and second toothings (33, 34) is equal to one.

3. The axle according to claim 1 or 2, wherein the transmission ratio between the respective axle shaft (4, 5) and the wheel hub (6) obtained by means of said first toothing (33) and said transmission (37) is comprised between 1.5 and 2.5.

4. The axle according to any one of the preceding claims, wherein each of said elastic means (20) comprise a coil spring (21) coaxial to said longitudinal axis (A) and comprising a first end cooperating in contact in a seat (22) made in the respective axle shaft (4, 5) and a second end cooperating in contact with a supporting element (23) carried by said torque splitting assembly (8).

5. The axle according to claim 4, wherein said seat (22) being sized to wrap a plurality of coils of said spring (21).

6. The axle according to claim 4 or 5, wherein said torque splitting assembly (8) comprises a differential gear (9), said supporting element (23) being integral with a cross-shaped support (16) carried by a gear train carrier (10) of said differential gear (9).

7. The axle according to one of the claims from 4 to 6, wherein said coupling between said axle shafts (4, 5) and said torque splitting assembly (8) comprising respective grooved couplings (18', 18"), said grooved couplings (18', 18") being sized to allow the continuous coupling between the respective axle shaft (4, 5) with said torque splitting assembly (8) between said first and second operative conditions.

8. The axle according to one of the claims from 4 to 7, wherein said supporting element (23) acting as an end stop element for the respective axle shaft (4, 5).

9. The axle according to one of the preceding claims, wherein each wheel hub (6) is carried in a rotationally free manner by the respective side portion (2b) defining a rotating chamber (27), said axle (1) comprising sealing means (26), interposed between said wheel hub (6) and said side portion, configured to keep said chamber (27) fluid-tight with respect to the outside, wherein said actuator means comprise valve means (31) configured to be connected to a pressurised fluid source, said valve means (31) being configured to allow the passage of said pressurised fluid in said chamber (27) to generate said force higher than the force of said elastic means (20) to pass to said second operative condition and configured to alternatively allow the outflow of said pressurised fluid from said chamber (27) to allow the return to said first operative condition.

10. The axle according to claim 9, comprising a respective slidable element (28) housed in each sealed chamber (27) in the respective said wheel hub (6), said slidable element (28) being connected to the respective axle shaft (4, 5).

11. The axle according to one of the claims 10 or 9, wherein said chamber (27) is divided into several portions fluidically connected to each other through channels (29), said portions and channels (29) defining a path (P) for said pressurised fluid.

12. The axle according to one of the preceding claims, wherein said transmission (37) comprises an epicyclic gear.

13. The axle according to one of the preceding claims, wherein said transmission (37) of each wheel hub (6) comprises a sun gear (38) defining a toothing (35) configured to mesh with said first toothing (33) of the respective axle shaft (4, 5), said transmission (37) comprising a plurality of planet gears (41) defining a toothing (42) configured to mesh with a second toothing (42) integral with said sun gear (38) and a toothing (43) integral with said casing (2), said planet gears (41) being carried in a rotationally free manner with respect to the axis thereof by said wheel hub (6).

14. The axle according to claim 13, wherein said sun gear (38) is axially supported in a sliding manner along said axis (A) by said wheel hub (6).

15. A vehicle comprising a frame and at least an axle connected to said frame according to one of the preceding claims.

## Patentansprüche

1. Achse (1) für ein Fahrzeug, umfassend:
- ein Gehäuse (2), das einen Raum (3) entlang einer Längsachse (A) begrenzt und einen zentralen Teil (2a) und ein Paar von Seitenteilen (2b) umfasst, die mit dem zentralen Teil entlang der Achse (A) verbunden sind;
- ein Paar von Achswellen (4, 5), die teilweise in dem Raum (3) untergebracht sind und jeweils innere Enden (4b, 5b) umfassen, die mit einer Antriebswelle (7) zusammenwirken, die dazu ausgebildet ist, ein Antriebsdrehmoment auf die Achswellen (4, 5) zu übertragen;
- jeweilige Radnaben (6), die frei drehbar durch das Gehäuse (2) auf den Seitenteilen (2b) getragen werden und von denen jede mit einem jeweiligen äußeren Ende (4a, 5a) der Achswellen (4, 5) zusammenwirkt,
- wobei die Achse (1) eine Drehmomentteilungsanordnung (8) umfasst, die in dem Raum (3) untergebracht ist und zwischen der Antriebswelle (7) und den Achswellen (4, 5) wirkend angeordnet ist und dazu ausgebildet ist, das von der Antriebswelle (7) aus wirkende Drehmoment auf die letzteren aufzuteilen,
**dadurch gekennzeichnet, dass** die Achswellen (4,5) mit der Drehmomentteilungsanordnung (8) gleitend bezüglich der Achse (A) verbunden sind,
wobei die Achse (1) elastische Mittel (20) umfasst, die in der Drehmomentteilungsanordnung (8) untergebracht sind und dazu ausgebildet sind, eine Kraft auszuüben, die parallel zu der Achse (A) gegen die Achswellen (4, 5) gerichtet ist, um diese in einem ersten Betriebszustand zu halten,
wobei die Achse (1) ferner Betätigungsmittel umfasst, die zwischen jeder Radnabe (6) und der jeweiligen Achswelle (4, 5) angeordnet sind, ausgebildet zur selektiven Ausübung einer Kraft auf die jeweilige Achswelle (4, 5), die höher ist als die Kraft, die durch die elastischen Mittel (20) ausgeübt wird, zur Bewegung derselben aus dem ersten in einen zweiten Betriebszustand, wobei jede Achswelle (4, 5) mit einer ersten Zahnung (33) versehen ist und jede Radnabe (6) mit einer zweiten Zahnung (34) versehen ist, die einteilig mit der Radnabe (4) ausgebildet ist, und mit einem Getriebe (37), dazu ausgebildet, zwischen der Radnabe (6) und der jeweiligen Achswelle (4, 5) mit diesen zusammenzuwirken, wobei die erste Zahnung (33) die zweite Zahnung (34) in dem ersten Betriebszustand kämmt und das Getriebe (37) in dem zweiten Betriebszustand kämmt,
wobei das Übersetzungsverhältnis zwischen der jeweiligen Achswelle (4,5) und der Radnabe (6), welches durch die ersten und zweiten Zahnungen (33, 34) erreicht wird, sich von dem Übersetzungsverhältnis zwischen der jeweiligen Achswelle (4, 5) und der Radnabe (6) unterscheidet, welches durch die zweite Zahnung (34) und das Getriebe (37) erreicht wird.

2. Achse gemäß Anspruch 1, bei welcher das Übersetzungsverhältnis zwischen der jeweiligen Achswelle (4, 5) und der Radnabe (6), das durch die ersten und zweiten Zahnungen (33, 34) erreicht wird, gleich Eins ist.

3. Achse gemäß Anspruch 1 oder 2, bei welcher das Übersetzungsverhältnis zwischen der jeweiligen Achswelle (4, 5) und der Radnabe (6), das durch die erste Zahnung (33) und das Getriebe (37) erreicht wird, zwischen 1,5 und 2,5 liegt.

4. Achse gemäß einem der vorhergehenden Ansprüche, bei welcher die elastischen Mittel (20) eine Schraubenfeder (21) umfassen, die koaxial zur Längsachse (A) liegt und die ein erstes Ende umfasst, das zusammenwirkend in Kontakt mit einem Sitz (22) steht, der in der jeweiligen Achswelle (4, 5) ausgebildet ist, und ein zweites Ende, das zusammenwirkend in Kontakt mit einem Lagerelement (23) steht, das von der Drehmomentteilungsanordnung (8) getragen wird.

5. Achse gemäß Anspruch 4, bei welcher der Sitz (22) derart bemessen ist, dass er eine Mehrzahl von Windungen der Feder (21) aufgewickelt aufnehmen kann.

6. Achse gemäß Anspruch 4 oder 5, bei welcher die Drehmomentteilungsanordnung (8) ein Differentialgetriebe (9) umfasst, wobei das Lagerelement (23) einteilig mit einem kreuzförmigen Lager (16) ausgebildet ist, das von einem Getriebeträger (10) des Differentialgetriebes (9) getragen wird.

7. Achse gemäß einem der Ansprüche 4 bis 6, bei welcher die Kupplung zwischen den Achswellen (4,5) und der Drehmomentteilungsanordnung (8) jeweils mit Nuten versehene Kupplungen (18',18") umfasst, welche mit Nuten versehene Kupplungen (18',18") derart bemessen sind, dass sie eine kontinuierliche Kupplung zwischen der jeweiligen Achswelle (4,5) und der Drehmomentteilungsanordnung (8) zwischen den ersten und zweiten Betriebszuständen zulassen.

8. Achse gemäß einem der Ansprüche 4 bis 7, bei welcher das Lagerelement (23) als ein Endanschlagselement für die jeweilige Achswelle (4,5) wirkt.

9. Achse gemäß einem der vorhergehenden Ansprüche, bei welcher jede Radnabe (6) frei drehbar durch den jeweiligen Seitenteil (2b) getragen wird, der eine Drehkammer (27) begrenzt, wobei die Achse (1) Dichtungsmittel (26) umfasst, die zwischen der Radnabe (6) und dem Seitenanteil angeordnet sind und dazu ausgebildet sind, die Kammer (27) nach außen fluiddicht zu halten, wobei die Betätigungsmittel Ventilmittel (31) umfassen, die dazu ausgebildet ist, mit einer Druckfluidquelle verbunden zu sein, welche Ventilmittel (31) dazu ausgebildet sind, den Durchfluss des Druckfluids in die Kammer (27) zu ermöglichen, um eine Kraft zu erzeugen, die höher ist als die Kraft der elastischen Mittel (20), um in den zweiten Betriebszustand überzugehen, und die ferner dazu ausgebildet sind, alternativ das Ausströmen des Druckfluids aus der Kammer (27) zuzulassen, um die Rückkehr in den ersten Betriebszustand zu ermöglichen.

10. Achse gemäß Anspruch 9, umfassend jeweils ein verschiebbares Element (28) in jeder abgedichteten Kammer (27) in der jeweiligen Radnabe (6), welches verschiebbare Element (28) mit der jeweiligen Achswelle (4,5) verbunden ist.

11. Achse gemäß einem der Ansprüche 10 oder 9, bei welcher die Kammer (27) in mehrere Teile unterteilt ist, die miteinander durch Kanäle (29) fluidverbunden sind, welche Teile und Kanäle (29) einen Kanal (P) für das Druckfluid bilden.

12. Achse gemäß einem der vorhergehenden Ansprüche, bei welchem das Getriebe (37) ein epizyklisches Getriebe umfasst.

13. Achse gemäß einem der vorhergehenden Ansprüche, bei welchem das Getriebe (37) jeder Radnabe (6) einen Sonnenrad (38) umfasst, das eine Zahnung (35) definiert, dazu ausgebildet ist, die erste Zahnung (33) der jeweiligen Achswelle (4,5) zu kämmen, und welches Getriebe (37) eine Mehrzahl von Planetenzahnrädern (41) umfasst, die eine Zahnung (42) definieren, die dazu ausgebildet ist, eine zweite Zahnung (42) zu kämmen, die einteilig mit dem Sonnenzahnrad (38) ausgebildet ist, und eine Zahnung (43), die einteilig mit dem Gehäuse (2) ausgebildet ist, welche Planetenzahnräder (41) frei drehend bezüglich ihrer Achse durch die Radnabe (6) getragen zu werden.

14. Achse gemäß Anspruch 13, bei welcher das Sonnenzahnrad (38) axial verschiebbar entlang der Achse (A) durch die Radnabe (6) getragen zu werden.

15. Fahrzeug, umfassend einen Rahmen und zumindest eine mit dem Rahmen verbundene Achse gemäß einem der vorhergehenden Ansprüche.

## Revendications

1. Essieu (1) pour un véhicule comprenant :
un carter (2) définissant un espace (3) le long d'un axe longitudinal (A) et comprenant une partie centrale (2a) et une paire de parties latérales (2b) raccordées à la partie centrale le long dudit axe (A) ;
une paire d'arbres d'essieu (4, 5) partiellement logés dans ledit espace (3) et comprenant des extrémités internes (4b, 5b) respectives coopérant avec un arbre d'entraînement (7) configuré pour fournir un couple d'entraînement auxdits arbres d'essieu (4, 5) ;
des moyeux de roue (6) respectifs portés, d'une manière libre en rotation, par ledit carter (2) sur lesdites parties latérales (2b) et coopérant chacune avec une extrémité externe (4a, 5a) respective desdits arbres d'essieu (4, 5),
ledit essieu (1) comprend un ensemble diviseur de couple (8) logé dans ledit espace (3) et intercalé, de manière opérationnelle, entre ledit arbre d'entraînement (7) et lesdits arbres d'essieu (4, 5) et configuré pour diviser le couple provenant dudit arbre d'entraînement (7) par ce dernier, **caractérisé en ce que** lesdits arbres d'essieu (4, 5) sont raccordés audit ensemble diviseur de couple (8) d'une manière coulissante par rapport audit axe (A),
ledit essieu (1) comprenant des moyens élastiques (20) logés dans ledit ensemble diviseur de couple (8) et configurés pour exercer une force dirigée parallèlement audit axe (A) contre lesdits arbres d'essieu (4, 5) pour les maintenir dans une première condition opérationnelle,
ledit essieu (1) comprenant en outre des moyens actionneurs intercalés entre chaque moyeu de roue (6) et l'arbre d'essieu (4, 5) respectif configurés pour exercer sélectivement une force sur l'arbre d'essieu (4, 5) respectif supérieure à la force exercée par lesdits moyens élastiques (20) pour les déplacer de ladite première à une seconde condition opérationnelle, chaque arbre d'essieu (4, 5) étant prévu avec une première denture (33) et chaque moyeu de roue (6) étant prévu avec une seconde denture (34) réalisée, de manière solidaire, avec ledit moyeu de roue (6) et avec une transmission (37) configurée pour être intercalée, de manière opérationnelle, entre ledit moyeu de roue (6) et l'arbre d'essieu (4, 5) respectif, ladite première denture (33) s'engrenant avec ladite seconde denture (34) dans ladite première condition opérationnelle et avec ladite transmission (37) dans ladite seconde condition opérationnelle,
dans lequel le rapport de transmission entre l'arbre d'essieu (4, 5) respectif et le moyeu de roue (6) obtenu au moyen desdites première et seconde dentures (33, 34) étant différent par rapport au rapport de transmission entre l'arbre d'essieu (4, 5) respectif et le moyeu de roue (6) obtenu au moyen de ladite seconde denture (34) et de ladite transmission (37).

2. Essieu selon la revendication 1, dans lequel le rapport de transmission entre l'arbre d'essieu (4, 5) respectif et le moyeu de roue (6) obtenu au moyen desdites première et seconde dentures (33, 34) est égal à un.

3. Essieu selon la revendication 1 ou 2, dans lequel le rapport de transmission entre l'arbre d'essieu (4, 5) respectif et le moyeu de roue (6) obtenu au moyen de ladite première denture (33) et de ladite transmission (37) est compris entre 1,5 et 2,5.

4. Essieu selon l'une quelconque des revendications précédentes, dans lequel chacun desdits moyens élastique (20) comprend un ressort hélicoïdal (21) coaxial audit axe longitudinal (A) et comprenant une première extrémité coopérant en contact dans un siège (22) réalisé dans l'arbre d'essieu (4, 5) respectif et une seconde extrémité coopérant en contact avec un élément de support (23) porté par ledit ensemble diviseur de couple (8).

5. Essieu selon la revendication 4, dans lequel ledit siège (22) étant dimensionné pour envelopper une pluralité de spires dudit ressort (21).

6. Essieu selon la revendication 4 ou 5, dans lequel ledit ensemble diviseur de couple (8) comprend un engrenage différentiel (9), ledit élément de support (23) étant solidaire avec un support en forme de croix (16) porté par un support de train d'engrenages (10) dudit engrenage différentiel (9).

7. Essieu selon l'une des revendications 4 à 6, dans lequel ledit couplage entre lesdits arbres d'essieu (4, 5) et ledit ensemble diviseur de couple (8) comprenant des couplages rainurés (18', 18") respectifs, lesdits couplages rainurés (18', 18") étant dimensionnés pour permettre le couplage continu entre l'arbre d'essieu (4, 5) respectif avec ledit ensemble diviseur de couple (8) entre lesdites première et seconde conditions opérationnelles.

8. Essieu selon l'une des revendications 4 à 7, dans lequel ledit élément de support (23) servant d'élément de butée d'extrémité pour l'arbre d'essieu (4, 5) respectif.

9. Essieu selon l'une des revendications précédentes, dans lequel chaque moyeu de roue (6) est porté, d'une manière libre en rotation, par la partie latérale (2b) respective définissant une chambre rotative (27), ledit essieu (1) comprenant des moyens d'étanchéité (26) intercalés entre ledit moyeu de roue (6) et ladite partie latérale, configurés pour maintenir ladite chambre (27) étanche au fluide par rapport à l'extérieur, dans lequel lesdits moyens actionneurs comprennent des moyens de valve (31) configurés pour être raccordés à une source de fluide sous pression, lesdits moyens de valve (31) étant configurés pour permettre le passage dudit fluide sous pression dans ladite chambre (27) afin de générer ladite force supérieure à la force desdits moyens élastiques (20) pour passer dans ladite seconde condition opérationnelle et configurés pour permettre, de manière alternée, la sortie dudit fluide sous pression de ladite chambre (27) pour permettre le retour dans ladite première condition opérationnelle.

10. Essieu selon la revendication 9, comprenant un élément coulissant (28) respectif logé dans chaque chambre étanche (27) dans ledit moyeu de roue (6) respectif, ledit élément coulissant (28) étant raccordé à l'arbre d'essieu (4, 5) respectif.

11. Essieu selon l'une des revendications 10 ou 9, dans lequel ladite chambre (27) est divisée en plusieurs parties raccordées, de manière fluidique, entre elles, par des canaux (29), lesdites parties et les canaux (29) définissant une trajectoire (P) pour ledit fluide sous pression.

12. Essieu selon l'une des revendications précédentes, dans lequel ladite transmission (37) comprend un engrenage épicycloïdal.

13. Essieu selon l'une des revendications précédentes, dans lequel ladite transmission (37) de chaque moyeu de roue (6) comprend un planétaire (38) définissant une denture (35) configurée pour s'engrener avec ladite première denture (33) de l'arbre d'essieu (4, 5) respectif, ladite transmission (37) comprenant une pluralité d'engrenages planétaires (41) définissant une denture (42) configurée pour s'engrener avec une seconde denture (42) solidaire avec ledit planétaire (38) et une denture (43) solidaire avec ledit carter (2), lesdits engrenages planétaires (41) étant portés, d'une manière libre en rotation, par rapport à leur axe, par ledit moyeu de roue (6).

14. Essieu selon la revendication 13, dans lequel ledit planétaire (38) est axialement supporté, de manière coulissante, le long dudit axe (A) par ledit moyeu de roue (6).

15. Véhicule comprenant un cadre et au moins un essieu raccordé audit cadre selon l'une des revendications précédentes.
